# EUROPEAN PATENT APPLICATION

(11) **EP 4 835 636 A1**
(43) Date of publication of application: **04.11.2026**
(21) Application number: 24915004.6
(22) Date of filing: 12.11.2024
(51) Int. Cl.: G06F 3/04817

(54) **TERMINAL DESKTOP DISPLAY METHOD, COMPUTER-READABLE STORAGE MEDIUM, AND ELECTRONIC DEVICE**

(30) Priority: 03.01.2024 CN 202410008267
(71) Applicant: ZTE CORPORATION, Shenzhen, Guangdong 518057 (CN)
(72) Inventor: FANG, He, Shenzhen, Guangdong 518057 (CN)
(74) Representative: Canzler & Bergmeier Patentanwälte Partnerschaft mbB
(86) International application number: PCT/CN2024/131522
(87) International publication number: WO 2025/145788

(57) **Abstract**

Provided in the present application is a terminal desktop display method, comprising: acquiring and displaying a card component of an application, wherein the card component comprises at least one function control of the application; in response to a first operation for the card component, displaying a first application interface of the application, wherein the number of function controls comprised in the first application interface is greater than the number of function controls comprised in the card component; and in response to a second operation for the card component or in response to a third operation for the first application interface, displaying a second application interface of the application, wherein the number of function controls comprised in the second application interface is greater than the number of function controls comprised in the first application interface, and each function control calls at least one function of the application in response to a user input. Further provided in the present application are a computer-readable storage medium and an electronic device.

## Description

### CROSS-REFERENCE TO RELATED APPLICATIONS

This application claims priority to Chinese patent application No. 202410008267.9 filed with the China Patent Office on January 3, 2024, which is incorporated by reference hereby in its entirety.

### TECHNICAL FIELD

The present application relates to, but is not limited to, the technical field of terminals.

### BACKGROUND

In existing terminal systems, applications are generally launched by performing corresponding operations on application icons, and therefore, application icons corresponding to the respective applications are displayed on an interactive interface (i.e., a desktop) of the terminal system. However, the desktop may become crowded when a large number of applications are installed in the terminal system.

In view of this, an existing solution has been proposed to classify application icons and display application icons of the same class in a folder, thereby reducing the number of application icons displayed on the desktop.

At the same time, in existing terminal systems, notification messages and application messages are managed by means of notifications. Illustratively, a user may be reminded to pay attention to relevant notification messages and/or application messages by turning on or off a notification permission. However, when existing notifications appear in a notification bar, the notification bar may not be able to display all notifications due to a limited display area. Moreover, the messy notifications in the notification bar are not classified, resulting in poor user experience.

In addition, in many cases, instead of using all functions, a user may launch an application only to use some simple functions of the application or obtain some information. However, if the application can only be launched in one manner, it may result in relatively high power consumption and performance loss.

### SUMMARY

Embodiments of the present application provide a terminal desktop display method, a computer-readable storage medium, and an electronic device, which aim to solve at least one technical problem in the existing art.

In a first aspect, an embodiment of the present application provides a terminal desktop display method, including: acquiring and displaying a card component of an application, wherein the card component includes at least one function control of the application; in response to a first operation on the card component, displaying a first application interface of the application, wherein the number of function controls included in the first application interface is greater than the number of function controls included in the card component; and in response to a second operation on the card component or in response to a third operation on the first application interface, displaying a second application interface of the application, wherein the number of function controls included in the second application interface is greater than the number of function controls included in the first application interface, wherein each function control calls at least one function of the application in response to a user input.

In a second aspect, an embodiment of the present application provides a computer-readable storage medium having a computer program stored thereon which, when executed by a processor, causes the processor to implement any terminal desktop display method described herein.

In a third aspect, an embodiment of the present application provides an electronic device, including: a memory configured to store computer program instructions; and at least one processor configured to execute the computer program instructions to implement any terminal desktop display method described herein.

### BRIEF DESCRIPTION OF DRAWINGS

FIG. 1 shows a flowchart of a terminal desktop display method according to an embodiment of the present application.
FIG. 2 shows a schematic diagram of switching from displaying a card component to displaying a first application interface in a terminal desktop display method according to an embodiment of the present application.
FIG. 3 shows a schematic diagram of switching from displaying a card component or displaying a first application interface to displaying a second application interface in a terminal desktop display method according to an embodiment of the present application.
FIG. 4 shows a schematic diagram of mutual switching among a card component, a first application interface, and a second application interface of an application in a terminal desktop display method according to an embodiment of the present application.
FIG. 5 shows a schematic diagram of a card according to an embodiment of the present application.
FIG. 6 shows a schematic diagram of switching the card components displayed in a card according to an embodiment of the present application.
FIG. 7 shows another schematic diagram of switching the card components displayed in a card according to an embodiment of the present application.
FIG. 8 shows a schematic diagram of a card component including a display bar configured to display notification information according to an embodiment of the present application.
FIG. 9 shows a schematic diagram of switching between displaying a card component and displaying an application icon in a terminal desktop display method according to an embodiment of the present application.
FIG. 10 shows a schematic diagram of switching between displaying a card and displaying a folder in a terminal desktop display method according to an embodiment of the present application.
FIG. 11 shows a schematic diagram of switching the displayed function controls in a card component according to an embodiment of the present application.
FIG. 12 shows a schematic diagram of switching the displayed function controls in a first application interface according to an embodiment of the present application.
FIG. 13 shows a schematic diagram of switching the displayed function controls in a second application interface according to an embodiment of the present application.
FIG. 14 shows a schematic diagram of a card component including an application icon according to an embodiment of the present application.
FIG. 15 shows a schematic diagram of a first application interface including an application icon according to an embodiment of the present application.
FIG. 16 shows a schematic diagram of a second application interface including an application icon according to an embodiment of the present application.
FIG. 17 shows a schematic diagram of a computer-readable storage medium according to an embodiment of the present application.
FIG. 18 shows a schematic diagram of an electronic device according to an embodiment of the present application.
FIG. 19 shows an exemplary diagram of switching the displayed card components and function controls thereof according to an embodiment of the present application.
FIG. 20 shows an exemplary diagram of switching the displayed first application interfaces and function controls thereof according to an embodiment of the present application.
FIG. 21 shows an exemplary diagram of switching the displayed second application interfaces and function controls thereof according to an embodiment of the present application.
FIG. 22 shows an exemplary diagram of a function triggered and called by a function control of a first application interface after receiving a user operation according to an embodiment of the present application.

### DETAILED DESCRIPTION OF EMBODIMENTS

To make those skilled in the art better understand the technical solutions in the embodiments of the present application, the terminal desktop display method, the computer-readable storage medium, and the electronic device provided in the embodiments of the present application will be described below in detail in conjunction with the accompanying drawings.

Exemplary embodiments will be described more sufficiently below with reference to the accompanying drawings, but which may be embodied in different forms and the present application should not be construed as limited to the embodiments set forth herein. These embodiments are provided so that the present application will be more thorough and complete, and will fully convey the scope of the present application to those skilled in the art.

The embodiments of the present application and features thereof may be combined with each other as long as they are not contradictory. As used herein, the term "at least one", "and/or", or the like includes any and all combinations of one or more of the associated listed items.

It will be appreciated that the terminology used herein is for the purpose of describing specific embodiments only and is not intended to limit the present application. Although the terms "first", "second", etc. are used herein to describe elements (e.g., weighted fusion), the elements are not limited by these terms, which do not imply any order, quantity, or importance but are merely used to distinguish. For example, some of the first to twelfth operations may be interchanged with each other without departing from the scope of the present application, and a first type of application and a second type of application may be interchanged with each other, and so on.

Moreover, as used herein, the singular forms "a", "an" and "the" are intended to include the plural forms as well, unless the context clearly indicates otherwise. Depending on the context, the terms "if", "in response to", etc. as used herein may be interpreted as "during" or "when". It will also be understood that the term "comprise" or "include" or the like as used in this specification specifies the presence of specific features, entities, steps, operations, elements, and/or components, but does not preclude the presence or addition of one or more other features, entities, steps, operations, elements, components, and/or combinations thereof.

Unless otherwise defined, all terms (including technical and scientific terms) used herein have the same meaning as commonly understood by one of ordinary skill in the art. It will be further understood that terms, such as those defined in commonly used dictionaries, should be interpreted as having a meaning that is consistent with their meaning in the context of the existing art and the present application, and will not be interpreted in an idealized or overly formal sense unless expressly so defined herein.

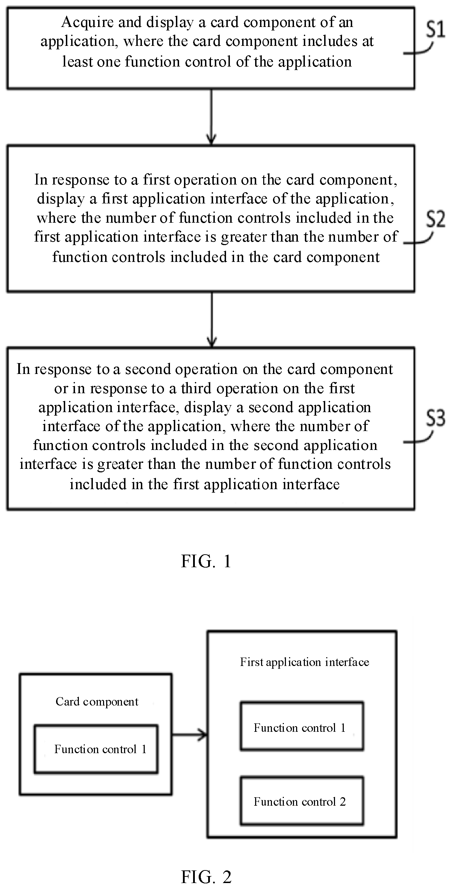

In a first aspect, an embodiment of the present application provides a terminal desktop display method which, as shown in FIG. 1, includes the following operations S1 to S3. S1 includes: acquiring and displaying a card component of an application, where the card component includes at least one function control of the application. S2 includes: in response to a first operation on the card component, displaying a first application interface of the application, where the number of function controls included in the first application interface is greater than the number of function controls included in the card component. S3 includes: in response to a second operation on the card component or in response to a third operation on the first application interface, displaying a second application interface of the application, where the number of function controls included in the second application interface is greater than the number of function controls included in the first application interface, where each function control calls at least one function of the application in response to a user input.

The terminal desktop display method provided in the embodiments of the present application may be applied to a terminal system (e.g., a mobile terminal system) to optimize the interactive interface of the terminal system, provide convenience for a user, improve the user experience, and minimize the power consumption and performance loss of the terminal system.

In the embodiments of the present application, the "function control" refers to an interactive interface capable of receiving a user operation (e.g., user input) to trigger and call at least one function of an application. It should be understood that the function of the application may include providing or displaying other related function controls (e.g., sub-function controls).

The card component, the first application interface, and the second application interface may be defined and implemented during or after development of the application, for example, by a developer of the application according to user requirements, terminal system requirements, etc., and may be bound to or embedded in the application. When the application is being installed or has been installed in the terminal system, the terminal system may interact with the application to acquire the card component, the first application interface, and the second application interface corresponding to the application.

In operation S1, the terminal system may interact with an application being installed or already installed in the terminal system to acquire a card component of the application, and display the card component on the interactive interface (i.e., desktop) of the terminal system.

As shown in FIG. 2, the card component includes at least one function control of the application. In other words, the card component intuitively displays at least one function control (e.g., function control 1) of the application, and without any additional operation on the card component, a user can interact with the application corresponding to the card component through the at least one function control (e.g., function control 1) of the card component, and trigger and call corresponding functions of the application.

In other words, the card component described in the embodiments of the present application may actually be understood as a simplified mode of the corresponding application, and a user can directly interact with the application corresponding to the card component through the card component, and trigger and call simple or key functions of the application without any additional operation on the card component.

In operation S2, if the user performs a first operation on the card component, the terminal system calls and displays a first application interface of the application corresponding to the card component.

As shown in FIG. 2, for the same application, the number of function controls included in the first application interface is greater than the number of function controls included in the card component. In other words, the first application interface intuitively displays a plurality of (at least two) function controls (e.g., function controls 1 and 2) of the corresponding application, and without any additional operation on the first application interface, a user can directly interact with the application corresponding to the first application interface through various function controls (e.g., function controls 1 and 2) of the first application interface, and trigger and call corresponding functions of the application.

In other words, compared with the card component, the first application interface may be understood as a more complex mode of the corresponding application, and a user can directly interact with the application corresponding to the first application interface through the first application interface, and trigger and call more functions of the application without any additional operation on the first application interface.

However, it should be understood that the first application interface may include part of the function controls of the corresponding application and may implement part of the functions of the application, so that when a user needs to use only part of the functions of the application, there is no need to launch all functions of the application, which can reduce resource occupation of the terminal system, improve the system performance, and reduce the power consumption and performance loss of the terminal system.

Here, the first operation may include a single-click operation on the card component. For example, depending on the functions of the terminal, a single-click operation may be performed on the card component via a touch end (e.g., a finger, a stylus) or an input device such as a mouse, and the single-click operation may include a single click with a duration less than a first preset duration (e.g., 1 second). The value of the first preset duration may be set as needed, and thus is not limited in the present application.

In operation S3, if the user performs a second operation on the card component, or performs a third operation on the first application interface corresponding to the card component, the terminal system calls and displays a second application interface of the application corresponding to the card component.

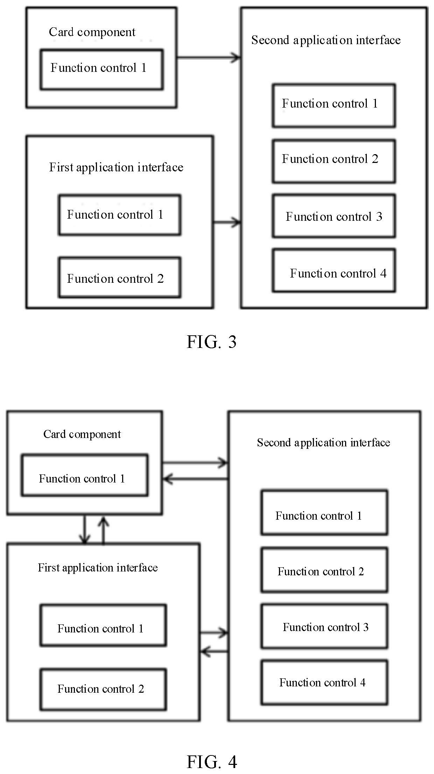

As shown in FIG. 3, for the same application, the number of function controls included in the second application interface is greater than the number of function controls included in the card component, and greater than the number of function controls included in the first application interface. In other words, the second application interface intuitively displays more function controls (e.g., function controls 1, 2, 3, 4) of the corresponding application, and without any additional operation on the second application interface, a user can directly interact with the application corresponding to the second application interface through various function controls (e.g., function controls 1, 2, 3, 4) of the second application interface, and trigger and call corresponding functions of the application.

In other words, compared with the card component and the first application interface, the second application interface may be understood as an even more complex mode of the corresponding application, and a user can directly interact with the application corresponding to the second application interface through the second application interface, and trigger and call even more functions of the application without any additional operation on the second application interface.

Here, the second operation is different from the first operation, while the third operation may be the same as or different from the first operation, or may be the same as or different from the second operation.

By way of example, the second operation may be a double-click operation on the card component. For example, depending on the functions of the terminal, a double-click operation may be performed on the card component via a touch end (e.g., a finger, a stylus) or an input device such as a mouse, and the double-click operation may include two consecutive click operations, with a time interval between the two clicks less than a second preset duration (e.g., 1.5 seconds), and a duration of each click less than the first preset duration (e.g., 1 second). Likewise, the value of the second preset duration is not limited in the present application, and the second preset duration may be the same as or different from the first preset duration.

In addition, for a terminal that can accept gesture operations (e.g., a terminal with touch functionality), the third operation may include a zoom-in operation on the first application interface by a pinch gesture with two fingers, which will not be described in detail herein.

It should be understood that the second application interface may include all function controls of the corresponding application and may implement all functions of the application. In other words, the second application interface may be a complete interactive interface of the application, and a user can trigger and call all functions of the application through the second application interface. Alternatively, as needed, the second application interface may be a partial interactive interface of the application, which is not limited in the present application.

Although the accompanying drawings show the types and numbers of function controls respectively included in the card component, the first application interface, and the second application interface, the drawings are only examples, and in the terminal desktop display method according to the embodiments of the present application, the types and numbers of function controls respectively included/displayed in the card component, the first application interface, and the second application interface are not limited to the examples shown in the drawings.

In practical applications, the card component may include or intuitively display a button corresponding to the first operation and/or the second operation, and the first application interface may include or intuitively display a button corresponding to the third operation, so that the first operation, the second operation, and/or the third operation may include a click operation on a corresponding button (e.g., a zoom-in button).

The first operation, the second operation, and the third operation are not limited in the present application, as long as the switching among the interactive interfaces corresponding to the application can be triggered and implemented.

According to the terminal desktop display method provided in the embodiments of the present application, each application may be displayed on the terminal desktop as different interactive interfaces (including the card component, the first application interface, and the second application interface), and different interactive interfaces correspond to different modes of the application, so that a user can switch the interactive interface of each application displayed on the terminal desktop as needed, and through the different interactive interfaces corresponding to each application, trigger and call functions of the application to different extents in different modes. Illustratively, in the case where the card component of the application is displayed on the terminal desktop, the user can trigger and call simple or key functions of the application through at least one function control of the card component; in the case where the first application interface of the application is displayed on the terminal desktop, the user can trigger and call more functions of the application through a plurality of (at least two) function controls of the first application interface; and in the case where the second application interface of the application is displayed on the terminal desktop, the user can trigger and call more comprehensive functions of the application through more function controls of the second application interface. In this manner, the terminal system can provide different extents of functions for each application based on user needs, thereby providing convenience to the user, improving the user experience, and reducing the power consumption and performance loss of the terminal system.

In some implementations, if the user performs a fourth operation on the first application interface, or performs a fifth operation on the second application interface, the terminal system calls and displays the card component of the application corresponding to the first application interface or the second application interface; and if the user performs a sixth operation on the second application interface, the terminal system calls and displays the first application interface of the application corresponding to the second application interface.

That is, as shown in FIG. 4, in the terminal desktop display method according to the embodiments of the present application, different interactive interfaces (including the card component, the first application interface, and the second application interface) of each application can be switched with each other.

Here, the fifth operation is different from the sixth operation, the fourth operation may be the same as or different from the fifth operation, or may be the same as or different from the sixth operation.

Likewise, in practical applications, the first application interface may include or intuitively display a button corresponding to the fourth operation, and the second application interface may include or intuitively display a button corresponding to the fifth operation and/or the sixth operation, so that the fourth operation, the fifth operation, and/or the sixth operation may include a click operation on a corresponding button (e.g., a zoom-out button).

The fourth operation, the fifth operation, and the sixth operation are not limited in the present application, as long as the switching among the interactive interfaces corresponding to the application can be triggered and implemented.

In some implementations, in operation S1, acquiring and displaying the card component of the application includes: acquiring and displaying a plurality of card components of a plurality of applications, each card component corresponding to one application; and grouping the plurality of card components by types of the plurality of applications, so that the card components corresponding to each type of application are grouped together and displayed as one card, where each card component is displayed in an area of the corresponding card.

Illustratively, the type of each application may be determined by an attribute of a function of the application, or specified by a user. For example, the terminal system may interact with an application being installed or already installed in the terminal system to acquire attributes of functions of each application, and automatically classify each application based on the attributes of functions thereof, or, the user may interact with the terminal system to specify the types of all or some applications, so that the terminal system can classify the applications based on the user's specification.

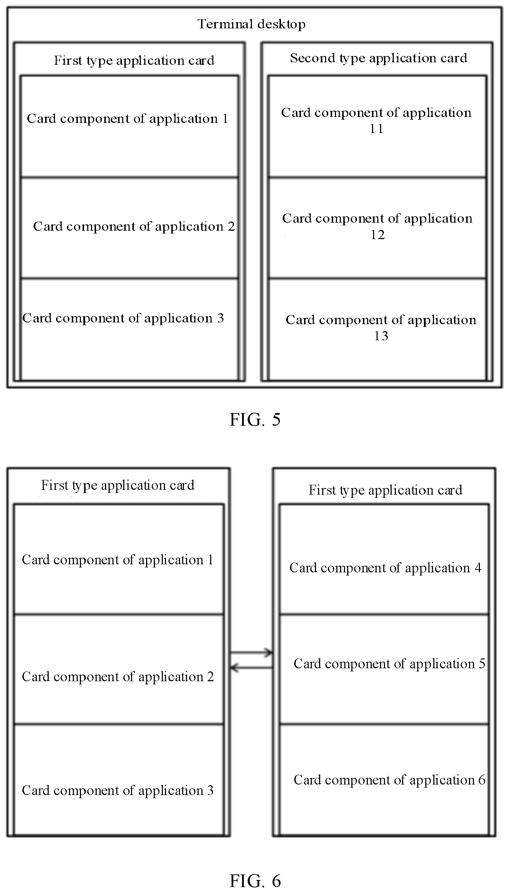

FIG. 5 shows a schematic diagram of a card according to an embodiment of the present application. As shown in FIG. 5, card components corresponding to a first type of application (e.g., including applications 1 to 3) are grouped together and displayed as one card (i.e., a first type application card), card components corresponding to a second type of application (e.g., including applications 11 to 13) are grouped together and displayed as one card (i.e., a second type application card), and each application is displayed as a card component in the card.

In the embodiments of the present application, instead of operating on the card, the user may directly perform the above-described first operation and/or second operation on any card component in the card, or directly operate on any function control of any card component in the card, thereby triggering and calling a corresponding function.

In practical applications, the first type of application may include a plurality of applications, but the first type application card may be only capable of displaying card components corresponding to some applications at one time. In this case, the terminal desktop display method according to the embodiments of the present application may further include: in response to a seventh operation on the card, switching the card components displayed in the card.

FIG. 6 shows a schematic diagram of switching the card components displayed in a card according to an embodiment of the present application. As shown in FIG. 6, the first type of application includes applications 1 to 6, but the first type application card can display card components corresponding to at most three applications at one time. In this case, the user may perform a seventh operation on the card to switch the card components displayed in the card. For example, the card may switch from displaying card components corresponding to applications 1 to 3 to displaying card components corresponding to applications 4 to 6, or, the card may switch from displaying card components corresponding to applications 4 to 6 to displaying card components corresponding to applications 1 to 3.

Here, by way of example, the seventh operation may include a swipe operation (e.g., swipe left, swipe right, swipe up, swipe down, etc.).

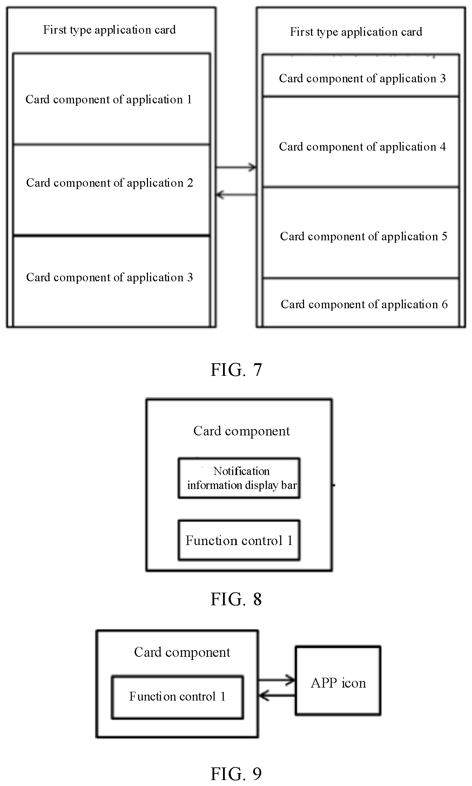

FIG. 7 shows a schematic diagram of switching the card components displayed in a card according to an embodiment of the present application. As shown in FIG. 7, the first type of application includes applications 1 to N, but the first type application card can display card components corresponding to at most three applications at one time. In this case, the user may perform a seventh operation on the card to switch the card components displayed in the card. For example, the card may switch from displaying card components corresponding to applications 1 to 3 to displaying card components corresponding to applications 3 to 6, or, the card may switch from displaying card components corresponding to applications 3 to 6 to displaying card components corresponding to applications 1 to 3, where the card components corresponding to applications 3 and 6 may be displayed incompletely.

Here, by way of example, the seventh operation may include a swipe operation (e.g., swipe up, swipe down, etc.).

It should be understood that N may be a positive integer greater than 6. In practice, N may be a positive integer greater than or equal to 2 based on the requirements, and the number of card components displayed per card may be adjusted accordingly. In other words, compared with the drawings, the first type of application may include more or fewer applications, and the first type application card may display card components corresponding to more or fewer applications at one time, which are not limited in the present application.

In some implementations, as shown in FIG. 8, the card component corresponding to any application may further include a display bar configured to display notification information.

Illustratively, the notification information may include at least one of prompt information prompting a user to update the application, information pushed by the application (e.g., news), information received by the application (e.g., text messages, WeChat messages), or user-defined information (e.g., schedule reminders).

It should be understood that the card component may include one or more display bars configured to display notification information. For example, in the case where the card component includes one display bar configured to display notification information, or the number of display bars included in the card component is less than the number of types and/or amount of notification information to be displayed, the notification information displayed in the display bar may be updated according to at least one of a type of the notification information, an arrival time of the notification information, or a user-defined rule.

Alternatively, in the case where the card component includes a plurality of display bars configured to display notification information, the notification information may be classified so that different display bars display different types of notification information (e.g., in different ways).

In some implementations, as shown in FIG. 9, if the user performs an eighth operation on a card component corresponding to any application, the terminal system may switch from displaying the card component of the application to displaying an application icon of the application. Conversely, if the user performs an eighth operation on the application icon of the application, the terminal system may switch from displaying the application icon of the application to displaying the card component of the application.

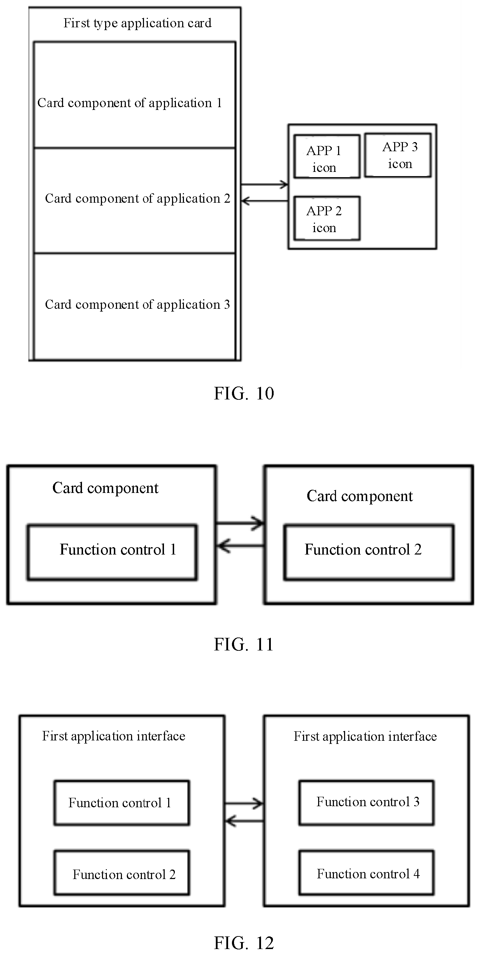

In some implementations, as shown in FIG. 10, if the user performs a ninth operation on a card for any type of application (e.g., the first type of application), the terminal system may switch from displaying the card to displaying the corresponding folder, and display each card component in the group of card components corresponding to the card as an application icon of the corresponding application, where the application icon is displayed in the folder. Conversely, if the user performs a ninth operation on a folder displayed on the terminal desktop, the terminal system may switch from displaying the folder to displaying the corresponding card, and display each application icon in a group of application icons contained in the folder as a card component of the corresponding application, where the card component is displayed in the card.

That is, the terminal system can switch a desktop display mode according to a user operation. By way of example, the eighth operation may include a long press operation on the card component or the application icon, and the long press operation may be an operation of pressing the card component or the application icon for a preset duration (e.g., greater than 2 seconds). The ninth operation may be the same as or different from the eighth operation, which is not described in detail here.

In some implementations, if the user performs a tenth operation on a card component corresponding to any application, the terminal system may switch the function controls intuitively displayed by the card component; if the user performs an eleventh operation on a first application interface corresponding to any application, the terminal system may switch the function controls intuitively displayed by the first application interface; and if a user performs a twelfth operation on a second application interface corresponding to any application, the terminal system may switch the function controls intuitively displayed by the second application interface.

Here, the tenth operation, the eleventh operation, and the twelfth operation may be the same or different.

Similar to the seventh operation described above, the tenth operation, the eleventh operation, and/or the twelfth operation may each include a corresponding swipe operation, for example, swipe left, swipe right, swipe up, or swipe down.

However, the tenth operation, the eleventh operation, and the twelfth operation are not limited in the present application, as long as the switching of display content (including function controls) in the interactive interface corresponding to the application can be triggered and implemented.

As shown in FIG. 11, the card component corresponding to any application may display only one function control (e.g., function control 1) at a time. However, if the user performs the tenth operation on the card component, the terminal system may switch the function controls intuitively displayed by the card component (e.g., switching from displaying function control 1 to displaying function control 2, or switching from displaying function control 2 to displaying function control 1).

As shown in FIG. 12, the first application interface corresponding to any application may display only two function controls at a time (e.g., function controls 1 and 2). However, if the user performs the eleventh operation on the first application interface, the terminal system may switch the function controls intuitively displayed by the first application interface (e.g., switching from displaying function controls 1 and 2 to displaying function controls 3 and 4, or switching from displaying function controls 3 and 4 to displaying function controls 1 and 2).

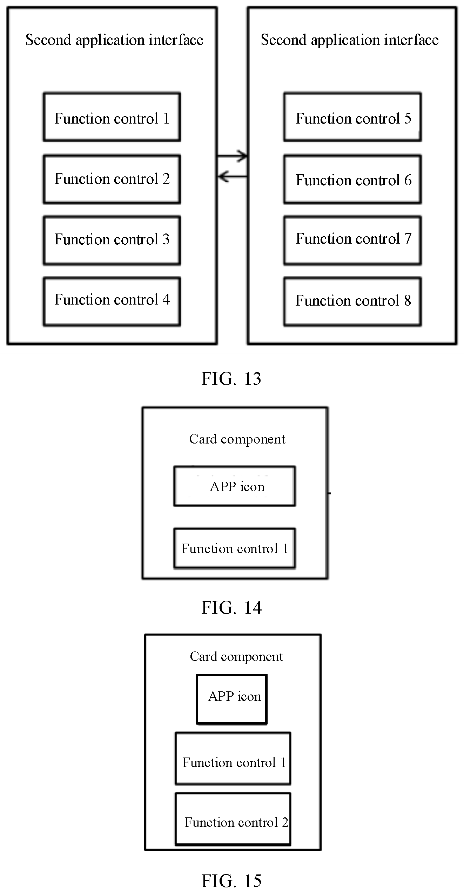

As shown in FIG. 13, the second application interface corresponding to any application may display only four function controls at a time (e.g., function controls 1 to 4). However, if the user performs the twelfth operation on the second application interface, the terminal system may switch the function controls intuitively displayed by the second application interface (e.g., switching from displaying function controls 1 to 4 to displaying function controls 5 to 8, or switching from displaying function controls 5 to 8 to displaying function controls 1 to 4).

By way of example, the tenth operation, the eleventh operation, and the twelfth operation may each include a swipe operation (including swipe up, swipe down, swipe left, or swipe right), but the present application is not limited thereto.

It should be understood that, for any one of the card component, the first application interface, or the second application interface, the function controls that can be intuitively displayed simultaneously (i.e., at one time) may be fully or partially switched according to a user operation. For example, different ranges of function controls displayed intuitively and simultaneously may be switched depending on the magnitude of a user's swipe operation. Moreover, for any one of the card component, the first application interface, or the second application interface, some of the function controls intuitively displayed may be incomplete.

In some implementations, to facilitate distinguishing by the user, the card component, the first application interface, and the second application interface corresponding to any application may each include an application icon of the application.

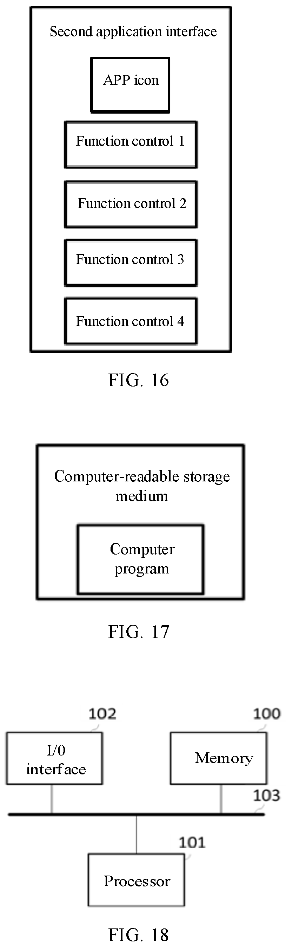

FIG. 14 shows a schematic diagram of a card component including an application icon according to an embodiment of the present application. FIG. 15 shows a schematic diagram of a first application interface including an application icon according to an embodiment of the present application. FIG. 16 shows a schematic diagram of a second application interface including an application icon according to an embodiment of the present application.

It should be understood that, for a card component including a display bar configured to display notification information and/or an application icon, if the user performs a tenth operation on the card component, the display of the display bar and/or the application icon may be switched together with the function controls, or the display bar and/or the application icon may always be intuitively displayed without being switched, which is not limited in the present application.

Likewise, for a first application interface and/or a second application interface including an application icon, if the user performs an eleventh operation on the first application interface, and/or performs a twelfth operation on the second application interface, the display of the application icon may be switched together with the function controls, or the application icon may always be intuitively displayed without being switched, which is not limited in the present application.

Furthermore, as needed, the first application interface and/or the second application interface may include a display bar configured to display notification information, which is not described in detail here.

In a second aspect, as shown in FIG. 17, an embodiment of the present application further provides a computer-readable storage medium having a computer program stored thereon which, the computer program, when executed by a processor, causes the processor to implement the terminal desktop display method according to any embodiment of the present application.

In a third aspect, an embodiment of the present application provides an electronic device which, as shown in FIG. 18, includes a memory 100 configured to store computer program instructions; and at least one processor 101 configured to execute the computer program instructions to implement the terminal desktop display method according to any embodiment of the present application.

In some implementations, the electronic device further includes: one or more I/O interfaces 102 connected between the processor 101 and the memory 100 and configured to enable information interaction between the processor 101 and the memory 100.

In some implementations, the processor 101 is a device with a data processing capability, including but not limited to a central processing unit (CPU), or the like. The memory 100 is a device with a data storage capability, including but not limited to, a random access memory (RAM, such as SDRAM, DDR, etc.), a read-only memory (ROM), an electrically erasable programmable read-only memory (EEPROM) or a flash memory (FLASH). The I/O interface (read/write interface) 102 is connected between the processor 101 and the memory 100 to enable information interaction between the processor 101 and the memory 100, and includes, but is not limited to, a data bus interface, or the like.

In some implementations, the processor 101, the memory 100, and the I/O interface 102 are interconnected via a bus 103, and further connected to other components of the device.

By way of example, the electronic device may be implemented as a terminal (e.g., a mobile terminal), including but not limited to a mobile phone, a tablet, a laptop, a personal computer, and the like.

For ease of understanding, implementations of the terminal desktop display method according to the embodiments of the present application are illustrated below with reference to the accompanying drawings by way of illustrative examples.

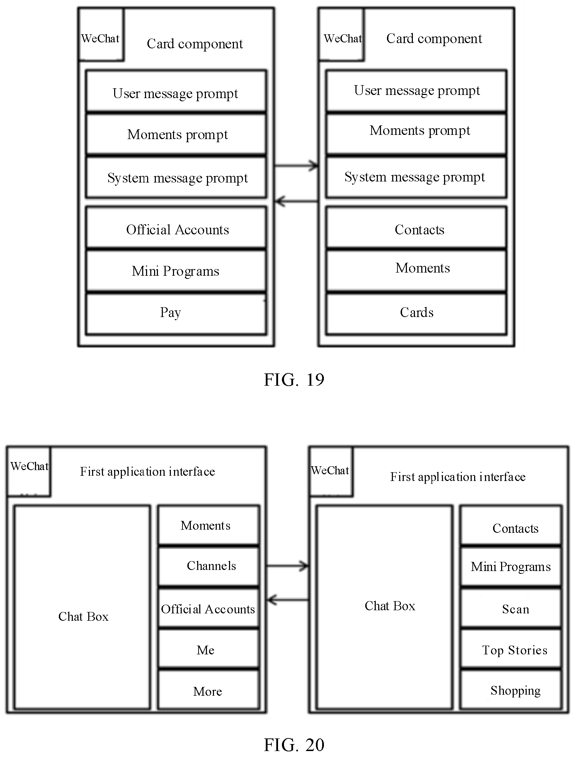

FIG. 19 shows a schematic diagram of a card component of the application "WeChat" according to an embodiment of the present application. As shown in FIG. 19, the card component of the application "WeChat" may include an application icon "WeChat", a display bar configured to display notification information "Moments prompt", "User message prompt", "System message prompt", and may further include a number of function controls such as "Official Accounts", "Mini Programs", "Pay", "Contacts", "Moments", "Cards", and the like. A user may directly learn relevant notification information through the display bar "Moments prompt", "User message prompt", "System message prompt", or directly operate (e.g., click) the function controls "Official Accounts", "Mini Programs", "Pay", "Contacts", "Moments", and/or "Cards" to trigger and call corresponding functions.

By way of example, the user may click the function control "Pay" to trigger and call a payment function (e.g., display a payment QR code), or click the function control "Mini Programs" to trigger the display of sub-function controls related to the function control "Mini Programs", where the sub-function controls may be interactive interfaces of applications that can be used without installation.

If the user performs a tenth operation on the card component, the function controls intuitively displayed by the card component may be switched between the function controls "Official Accounts", "Mini Programs", "Pay" and the function controls "Contacts", "Moments", "Cards".

FIG. 20 shows a schematic diagram of a first application interface of the application "WeChat" according to an embodiment of the present application. As shown in FIG. 20, the first application interface of the application "WeChat" may include an application icon "WeChat", and further include some function controls such as "Chat Box", "Moments", "Channels", "Official Accounts", "Me", "More", "Contacts", "Mini Programs", "Scan", "Top Stories", "Shopping", and the like. If the user performs an eleventh operation on the first application interface, the function controls intuitively displayed by the first application interface may be switched between the function controls "Chat Box", "Moments", "Channels", "Official Accounts", "Me", "More" and the function controls "Chat Box", "Contacts", "Mini Programs", "Scan", "Top Stories", "Shopping".

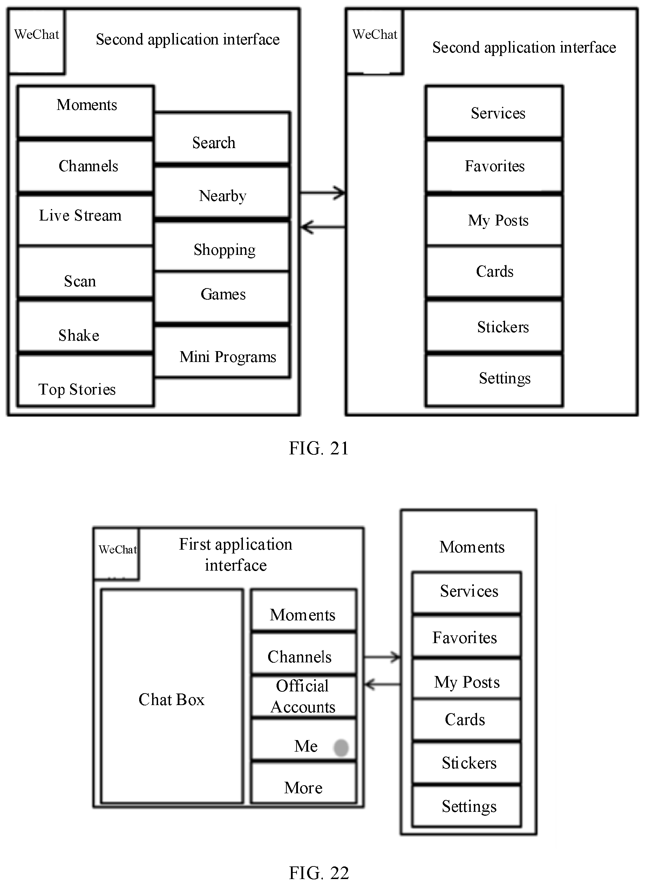

FIG. 21 shows a schematic diagram of a second application interface of the application "WeChat" according to an embodiment of the present application. As shown in FIG. 21, the second application interface of the application "WeChat" may include an application icon "WeChat", and further include all function controls of the application "WeChat". If the user performs a twelfth operation on the second application interface, the function controls intuitively displayed by the second application interface may be switched among all function controls of the application "WeChat", for example, between displaying sub-function controls "Moments", "Channels", "Live Stream", "Scan", "Shake", "Top Stories", "Search", "Nearby", "Shopping", "Games", "Mini Programs" of the function control "Discover" and displaying sub-function controls "Services", "Favorites", "My Posts", "Cards", "Stickers", "Settings" of the function control "Me".

FIG. 22 shows a schematic diagram of a function triggered and called by a specific function control of the first application interface of the application "WeChat" after receiving a user operation according to an embodiment of the present application. As shown in FIG. 22, if the function control "Me" of the first application interface of the application "WeChat" receives a user operation (i.e., a user input, e.g., a click), the terminal system may correspondingly call and display sub-function controls "Services", "Favorites", "My Posts", "Cards", "Stickers", "Settings" of the function control "Me". Alternatively, the user may directly operate the function control "Chat Box" of the first application interface of the application "WeChat" to directly use the chat function of the application "WeChat".

It should be understood that, in the terminal desktop display method according to the embodiments of the present application, the execution order of the operations is not limited to the order described above with reference to the accompanying drawings. Without departing from the scope of the present application, the execution order of the operations may be adjusted, and some operations may be performed in parallel.

In addition, those of ordinary skill in the art will appreciate that all or some of the operations and functions in the methods provided in the embodiments of the present application may be implemented as software, firmware, hardware, and appropriate combinations thereof. In a hardware implementation, the division between the functions mentioned in the above description does not necessarily correspond to the division of physical components; for example, one physical component may have multiple functions, or one function or operation may be performed cooperatively by several physical components. Some or all physical components may be implemented as software executed by a processor, such as a CPU, a digital signal processor or microprocessor, or implemented as hardware, or implemented as an integrated circuit, such as an application specific integrated circuit. Such software may be distributed on a computer-readable medium which may include a computer storage medium (or non-transitory medium) and a communication medium (or transitory medium). As is well known to those of ordinary skill in the art, the term computer storage medium includes volatile and nonvolatile, removable and non-removable media implemented in any method or technology for storing information, such as computer-readable instructions, data structures, program modules or other data. The computer storage medium includes, but is not limited to, a RAM, a ROM, an EEPROM, a flash or any other memory technology, a CD-ROM, a digital versatile disc (DVD) or any other optical disc storage, a magnetic cartridge, a magnetic tape, a magnetic disc storage or any other magnetic storage device, or may be any other medium used for storing the desired information and accessible by a computer. Moreover, it is well known to those of ordinary skill in the art that a communication medium typically includes a computer-readable instruction, a data structure, a program module, or other data in a modulated data signal, such as a carrier wave or other transport mechanism, and may include any information delivery medium.

Example embodiments have been described in the present application, and although specific terms are employed, they are used and should be interpreted merely in a generic and descriptive sense, not for purposes of limitation. In some instances, features, characteristics and/or elements described in connection with a particular embodiment may be used alone, or may be used in combination with features, characteristics and/or elements described in connection with other embodiments, unless expressly stated otherwise, as would be apparent to one skilled in the art. It will, therefore, be understood by those skilled in the art that various changes in form and details may be made therein without departing from the scope of the present application as set forth in the appended claims.

## Claims

1. A terminal desktop display method, comprising:
acquiring and displaying a card component of an application, wherein the card component comprises at least one function control of the application;
in response to a first operation on the card component, displaying a first application interface of the application, wherein a number of function controls included in the first application interface is greater than a number of function controls included in the card component; and
in response to a second operation on the card component or in response to a third operation on the first application interface, displaying a second application interface of the application, wherein a number of function controls included in the second application interface is greater than the number of function controls included in the first application interface,
wherein each function control calls at least one function of the application in response to a user input.

2. The terminal desktop display method according to claim 1, further comprising:
in response to a fourth operation on the first application interface, or in response to a fifth operation on the second application interface, displaying the card component of the application; and
in response to a sixth operation on the second application interface, displaying the first application interface of the application.

3. The terminal desktop display method according to claim 1, wherein acquiring and displaying the card component of the application comprises:
acquiring and displaying a plurality of card components of a plurality of applications, each card component corresponding to one application; and
grouping the plurality of card components by types of the plurality of applications, so that the card components corresponding to each type of application are grouped together and displayed as one card, wherein each card component is displayed in an area of the corresponding card.

4. The terminal desktop display method according to claim 3, further comprising:
in response to a seventh operation on the card, switching the card components displayed in the card.

5. The terminal desktop display method according to claim 3, wherein the type of each application is determined by an attribute of a function of the application, or specified by a user.

6. The terminal desktop display method according to claim 1, wherein the card component further comprises a display bar configured to display notification information.

7. The terminal desktop display method according to claim 6, wherein the notification information comprises at least one of prompt information prompting a user to update the application, information pushed by the application, information received by the application, or user-defined information.

8. The terminal desktop display method according to claim 6, further comprising:
updating the notification information displayed in the display bar according to at least one of a type of the notification information, an arrival time of the notification information, or a user-defined rule.

9. The terminal desktop display method according to claim 1, further comprising:
in response to an eighth operation on the card component, displaying the card component as an application icon of the corresponding application.

10. The terminal desktop display method according to claim 3, further comprising:
in response to a ninth operation on the card, displaying the card as a folder, and displaying each card component in a group of card components corresponding to the card as an application icon of the corresponding application,
wherein the application icon is displayed in the folder.

11. The terminal desktop display method according to claim 1, further comprising:
in response to a tenth operation on the card component, switching the function controls included in the card component;
in response to an eleventh operation on the first application interface, switching the function controls included in the first application interface; and
in response to a twelfth operation on the second application interface, switching the function controls included in the second application interface.

12. The terminal desktop display method according to claim 1, wherein each of the card component, the first application interface, and the second application interface comprises an application icon of the application.

13. A computer-readable storage medium storing a computer program thereon which, when executed by a processor, causes the processor to implement the terminal desktop display method according to any one of claims 1 to 12.

14. An electronic device, comprising:
a memory configured to store computer program instructions; and
at least one processor configured to execute the computer program instructions to implement the terminal desktop display method according to any one of claims 1 to 12.
